Europäisches Patentamt

European Patent Office

Office européen des brevets

(11) Veröffentlichungsnummer: **0 042 087**
B1

# EUROPÄISCHE PATENTSCHRIFT

(45) Veröffentlichungstag der Patentschrift:
18.05.83

(21) Anmeldenummer: 81104069.0

(22) Anmeldetag: 27.05.81

(51) Int. Cl.³: **B 60 T 15/06**

(54) **Zweikreis-Bremsventil.**

(30) Priorität: 14.06.80  DE 3022435

(43) Veröffentlichungstag der Anmeldung:
23.12.81 Patentblatt 81/51

(45) Bekanntmachung des Hinweises auf die Patenterteilung:
18.05.83 Patentblatt 83/20

(84) Benannte Vertragsstaaten:
DE FR NL SE

(56) Entgegenhaltungen:
DE-A-2 215 610
DE-A-2 507 661
DE-B-2 716 495
GB-A-2 019 516
US-A-3 923 346

(73) Patentinhaber: **Knorr-Bremse GmbH, Moosacher Strasse 80, D-8000 München 40 (DE)**

(72) Erfinder: **Vollmer, Otto, Joergstrasse 31, D-8000 München 21 (DE)**

## Zweikreis-Bremsventil

Die Erfindung betrifft ein Zweikreis-Bremsventil nach dem Gattungsbegriff des Patentanspruches 1.

Ein Zweikreis-Bremsventil der in Rede stehenden Art ist z.B. aus der US-A-3 923 346 bekannt. Es findet insbesondere als Fussbremsventil für die Bremsanlagen von Kraftfahrzeugen Verwendung, in dem die Bremskreise hintereinander angeordnet sind, d.h. es ist in Tandembauweise ausgebildet. Bei derartigen Ventilen eilt der nachgeordnete, pneumatisch gesteuerte Kreis systembedingt druckmässig dem vorgeschalteten Kreis nach, beispielsweise um einen Betrag von etwa 0,3–0,5 bar.

Diese Nacheilung muss bei der Auslegung der Bremsanlage berücksichtigt werden, was aber in den meisten Fällen nicht möglich ist, sei es, dass die Bremsanlagen schon bestehen oder dass bei der Auslegung von einer anderen Druckzuordnung der beiden Kreise ausgegangen wurde. In allen diesen Fällen wirkt sich die Druckabweichung bzw. die zu grosse Abweichung im Fahrbetrieb nachteilig aus, was sich insbesondere durch unterschiedlichen Bremsbelagverschleiss offenbart.

Davon ausgehend besteht die Aufgabe der Erfindung darin, ein Zweikreis-Bremsventil der in Rede stehenden Art so zu bilden, dass die den Betätigungskolben bzw. Stufungskolben des ersten Kreises mit dem Betätigungskolben des zweiten Kreises verbindende Betätigungseinrichtung möglichst einfach aufgebaut ist und ermöglicht, die sogenannte Nacheilung des zweiten Kreises zu vermindern oder sogar ganz aufzuheben. Es soll insbesondere auch möglich sein, die Einstellung der Korrektur der Nacheilung verändern zu können, wenn dies im Hinblick auf unterschiedliche Bremsanlagen wichtig sein sollte. Auch soll die Einrichtung platzsparend und voll ins Ventil integriert ausgebildet sein, ohne dass das Bremsventil nachträglich wesentlich verändert werden müsste; es soll demnach eine Nachrüstung bereits bestehender Anlagen durchführbar sein.

Die Lösung dieser Aufgabe kennzeichnet sich durch die Merkmale nach dem Kennzeichnungsteil des Patentanspruches 1.

Mit Hilfe der baulich einfachen Stangendurchführung ist es möglich, den zweiten Kreis der Bremsanlage jeweils dem ersten Kreis anzupassen, die funktionsmässig bedingte Nacheilung bei derartigen pneumatisch gesteuerten Anlagen kann demnach in einfacher Weise aufgehoben oder vermindert werden. Bei pneumatisch gesteuerten Ventilen der in Rede stehenden Art wirkt der ausgesteuerte Druck des ersten Kreises über eine Verbindung auch auf den Betätigungskolben des zweiten Kreises ein. Dieser wirkt als sogenannter Wiegekolben und wird gemäss der Erfindung bei gleichzeitiger pneumatischer Beaufschlagung zusätzlich durch die durch eine vorgespannte Feder abgefangene Stange der Betätigungseinrichtung beaufschlagt; es wird also mit baulich einfachen Mitteln eine zusätzliche Kraft aufgebracht, welche die Aussteuerung des zweiten Kreises dahingehend begünstigt, dass Druckdifferenzen zwischen dem ersten und zweiten Kreis vermindert oder aufgehoben werden.

Im Rahmen des der Erfindung eigenen Gedankens ist es auch möglich, den Abstand zwischen der Stange und dem Gewindestift dadurch zu verändern, dass der die Stange aufnehmende Federteller entsprechende Einstellmittel aufweist, so eine Gewindebohrung, in welche die Stange eingeschraubt ist.

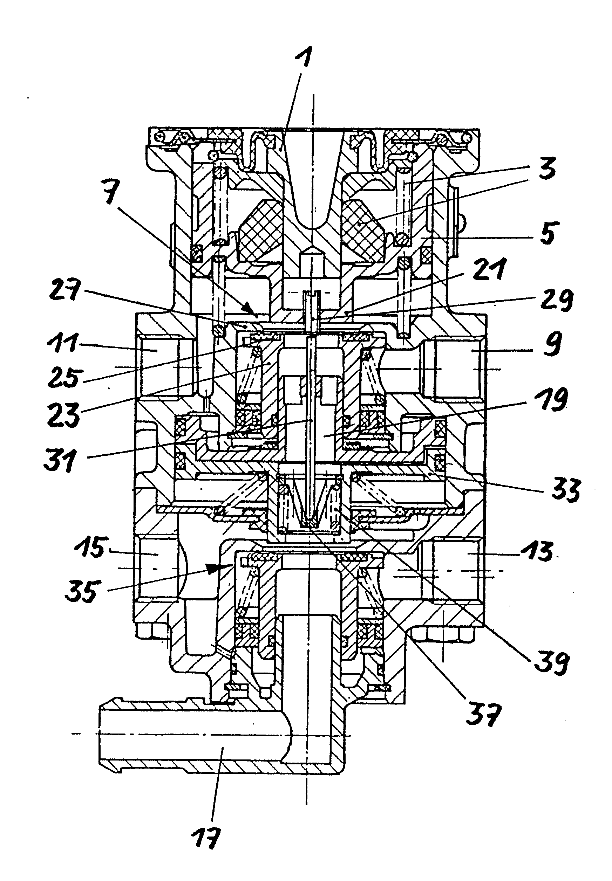

Die Erfindung ist nachfolgend anhand eines Ausführungsbeispiels unter Bezugnahme auf die beigefügte Zeichnung erläutert. Die Zeichnung gibt ein erfindungsgemässes Zweikreis-Bremsventil als Fussbremsventil für Bremsanlagen von Kraftfahrzeugen wieder.

In der Zeichnung ist ein zweikreisig wirkendes Bremsventil dargestellt, welches z.B. als Fussbremsventil vorgesehen ist. Bei diesem Fussbremsventil wirkt ein (nicht dargestelltes) Bremspedal auf ein Druckstück 1 ein. Das Druckstück 1 stützt sich über eine Federanordnung 3 an einem Stufungskolben 5, dem Betätigungskolben des ersten Kreises, ab. Der Stufungskolben 5 wirkt bei nach unten gerichteter Bewegung in bekannter Weise gegenüber einem Einlass- und Auslassventil 7 des ersten Kreises. Über einen Anschluss 9 steht der Vorrat des ersten Kreises an, während der Anschluss 11 mit den Bremszylindern des ersten Kreises in Verbindung ist. Entsprechende Anschlüsse 13 und 15 sind in bekannter Weise für den zweiten Kreis der Bremsanlage vorgesehen. Der am Fussbremsventil vorgesehene Auslass 17 steht mit einem das gesamte Bremsventil durchsetzenden Entlüftungskanal 19 in Verbindung, um eine (in der Zeichnung dargestellte) Entlüftung der an die Anschlüsse 11 und 15 angeschlossenen Bremsanlagen des ersten und zweiten Kreises vornehmen zu können.

Der am unteren Ende des Stufungskolbens 5 vorgesehene Fortsatz 21, welcher zum Belüften der Bremsanlage des ersten Kreises in bekannter Weise gegenüber einem an einer Ventilhülse 23 aufgesetzten Ventilelement 25 einwirkt, um das Ventilelement von einem gehäusefesten Ansatz 27 nach unten gerichtet zu lösen, ist im dargestellten Ausführungsbeispiel nach der Erfindung mit einem vorzugsweise von oben eingeschraubten Gewindestift 29 versehen, dessen Relativposition nach Wunsch verändert werden kann. Unterhalb des Gewindestifts 29 erstreckt sich eine vorzugsweise einen Abstand gegenüber dem Gewindestift aufweisende Stange 31, die den hohlen Entlüftungskanal 19 des ersten Kreises und des zweiten Kreises durchsetzt. Die Stange 31 ist an ihrem gemäss Darstellung unteren Ende vom Schaltkolben des zweiten Kreises abgefangen. Dieser Schaltkolben besteht in Form eines an sich bekannten Wiegekolbens 33, welcher in einer dem Stufungskolben 5 des ersten Kreises vergleichbaren Weise gegenüber einem Einlass- und Auslassventil 35 wirkt. Die Stange 31 stützt sich an einem Federteller 37 ab, welcher durch eine vorgespannte Feder 39 gegenüber einem innenseitig am Wiegekolben ausgebildeten Anschlag abgestützt ist. Es ist auch möglich, dass die Stange 31 in ein Gewinde am Boden des Federtellers 37 eingreift.

Bei Betätigung des Stufungskolbens 5 wirkt der Gewindestift 29 nach einer vorbestimmten Wegstrecke auf die Oberseite der Stange 31 ein, welche ihrerseits über den Federteller 37 eine nach unten gerichtete Kraft auf den Wiegekolben 33 ausübt. Mit dieser Kraftunterstützung wirkt der Stufungskolben 5 als Betätigungskolben des ersten Kreises über den Gewindestift 29, die Stange 31, den Federteller 37 und die Feder 39 auf den Wiegekolben 33 als Betätigungskolben des zweiten Kreises genau definiert so ein, dass der eingesteuerte Druck unterhalb des Wiegekolbens 33 entsprechend der Betätigungskraft ansteigt, d.h. die Druck-Nacheilung wird vermindert oder ganz aufgehoben.

## Patentansprüche

1. Zweikreis-Bremsventil, insbesondere für Bremsanlagen von Kraftfahrzeugen, mit zwei in einem Ventilgehäuse hintereinander angeordneten Ventilen (25, 35), von welchen der Betätigungskolben (5) des ersten Ventils (25) mittels einer Stange (31) mit dem Betätigungskolben (33) des zweiten Ventils (35) in Wirkverbindung steht, dadurch gekennzeichnet, dass sich die Stange (31) mit einem Ende mittels einer Feder (39) am Betätigungskolben (33) des zweiten Kreises abstützt, während das entgegengesetzte Ende durch ein am Betätigungskolben (5) des ersten Kreises vorgesehenes, positionsveränderliches Einstellelement (29) beaufschlagbar ist.

2. Zweikreis-Bremsventil nach Anspruch 1, dadurch gekennzeichnet, dass in den Boden (21) des Betätigungskolbens (5) des ersten Kreises ein positionsveränderlich einstellbarer Gewindestift (29) eingeschraubt ist, unter welchem sich unter einem einstellbaren Abstand ein Ende der Stange (31) erstreckt, und dass das entgegengesetzte Ende der Stange (31) von einem Federteller (37) abgestützt ist, welcher seinerseits ein Ende einer am Betätigungskolben (33) des zweiten Kreises angeordneten, vorgespannten Feder (39) begrenzt.

3. Zweikreis-Bremsventil nach einem der vorangehenden Ansprüche, dadurch gekennzeichnet, dass der Gewindestift von der Oberseite des Zweikreis-Bremsventils einstellbar ist.

## Claims

1. Dual-circuit brake valve, particularly for motor vehicle brake systems, comprising two valves (25, 35) in tandem in a valve body, and the actuating piston (5) of the first valve (25) being actively linked through a rod (31) to the actuating piston (33) of the second valve (35), wherein one end of the rod (31) is supported through a spring (39) by the actuating piston (33) of the second circuit, while the opposite end can be actuated by a variable-position adjuster (29) which is provided on the actuating piston (5) of the first circuit.

2. Dual-circuit brake valve as defined in Claim 1, wherein the bottom (21) of the actuating piston (5) of the first circuit contains an adjustable variable-position setscrew (29) beneath which one end of the rod (31) extends at an adjustable distance, and wherein the opposite end of the rod (31) is supported by a spring plate (37) which in turn limits one end of a preloaded spring (39) located on the actuating piston (33) of the second circuit.

3. Dual-circuit brake valve as defined in any one of the preceding claims, wherein the setscrew can be adjusted from the upper side of the dual-circuit brake valve.

## Revendications

1. Soupape de frein à double circuit, plus particulièrement pour des installations de freinage de véhicules automobiles, avec deux soupapes (25, 35) disposées l'une derrière l'autre dans un boîtier de soupape, et dont le piston de commande (5) de la première soupape (25) est en liaison active, à l'aide d'une tige (31), avec le piston de commande (33) de la seconde soupape (35), caractérisée par le fait que la tige (31) prend appui, par une extrémité et par l'intermédiaire d'un ressort (39), sur le piston de commande (33) du second circuit, alors que l'extrémité opposée est susceptible d'être chargée par un élément de réglage (29) qui est prévu sur le piston de commande (5) du premier circuit et dont la position est susceptible d'être modifiée.

2. Soupape de frein à double circuit selon la revendication 1, caractérisée par le fait que dans le fond (21) du piston de commande (5) du premier circuit est visée une cheville filetée (29) réglable par modification de sa position et sous laquelle s'étend, à une distance réglable, une extrémité de la tige (31), et que l'extrémité opposée de la tige (31) est soutenue par une rondelle Belleville (37) qui, à son tour, limite un ressort prétendu (39) associé au piston de commande (33) du second circuit.

3. Soupape de frein à double circuit selon l'une des revendications précédentes, caractérisée par le fait que la cheville filetée est réglable à partir du côté supérieur de la soupape de frein à double circuit.